# EUROPEAN PATENT APPLICATION

(11) **EP 4 451 440 A1**
(43) Date of publication of application: **23.10.2024**
(21) Application number: 23168724.5
(22) Date of filing: 19.04.2023
(51) Int. Cl.: H01M 50/204, H01M 50/249, H01M 50/264

(54) **AN ENERGY STORAGE ASSEMBLY FOR A VEHICLE**

(71) Applicant: VOLVO TRUCK CORPORATION, 405 08 Göteborg (SE)
(72) Inventor: Höglund, Nils, 405 08 Göteborg (SE); Jonsson, Kasper, 417 21 Göteborg (SE); Ghosh, Pramathesh, 417 26 Göteborg (SE)
(74) Representative: Valea AB

(57) **Abstract**

The present disclosure relates to an energy storage assembly (12) for a vehicle (10), the energy storage assembly (12) comprising a housing, an energy storage module (24) and an attachment assembly (26), the energy storage module (24) comprising at least one energy storage system comprising one or more battery cells (28, 30), the housing accommodating the energy storage module (24),
the housing comprising a housing panel (32) at least partially delimiting the housing, the energy storage module (24) comprising an energy storage module frame (34) that in turn comprises a module panel (36),
the attachment assembly (26) comprising an outer member (52), an inner member (54) and a fastener (56), the outer member (52) being rigidly attached to the housing panel (32), the outer member (52) comprising an outer member opening (58) at least partially aligned with the housing panel opening (50), the inner member (54) being located at least partially within the outer member opening (58) such that a rotation of the inner member (54) relative to the outer member (52) around an axis of rotation (AR) will displace the inner member (54) relative to the outer member (52) in a direction parallel to the axis of rotation (AR).

## Description

### TECHNICAL FIELD

The disclosure relates generally to an energy storage assembly. In particular aspects, the disclosure relates to an energy storage assembly for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An electric vehicle, such as an electric heavy-duty vehicle, may comprise an energy storage assembly for storing electric energy to be used by one or more consumers of electric power, such as one or more electric motors for propulsion of the electric vehicle.

### SUMMARY

According to a first aspect of the disclosure, there is provided an energy storage assembly for a vehicle. The energy storage assembly comprises a housing, an energy storage module and an attachment assembly. The energy storage module comprises at least one energy storage system comprising one or more battery cells. The housing accommodates the energy storage module.

The housing comprises a housing panel at least partially delimiting the housing. The energy storage module comprises an energy storage module frame that in turn comprises a module panel.

The module panel extends in a module panel longitudinal direction, a module panel transversal direction and a module panel vertical direction. A longitudinal extension of the module panel in the module panel longitudinal direction is greater than each one of a transversal extension of the module panel in the module panel transversal direction and a vertical extension of the module panel in the module panel vertical direction.

The housing panel extends in a housing panel longitudinal direction, a housing panel transversal direction and a housing panel vertical direction. A longitudinal extension of the housing panel in the housing panel longitudinal direction is greater than each one of a transversal extension of the housing panel in the housing panel transversal direction and a vertical extension of the housing panel in the housing panel vertical direction.

The module panel comprises a module panel opening having a module panel opening extension in an opening direction forming a module panel opening angle to the module panel longitudinal direction. An absolute value of the module panel opening angle is less than 5°.

The housing panel comprises a first housing panel side and a second housing panel side being located on opposite sides of a plane defined by the housing panel longitudinal direction and the housing panel vertical direction. The housing panel further comprises a housing panel opening extending from the first housing panel side to the second housing panel side.

The attachment assembly comprises an outer member, an inner member and a fastener. The outer member is rigidly attached to the housing panel. The outer member comprises an outer member opening at least partially aligned with the housing panel opening, wherein the outer member opening comprises internal threads and the inner member comprises external threads. The inner member is located at least partially within the outer member opening whereby the internal threads mesh with the external threads such that a rotation of the inner member relative to the outer member around an axis of rotation will displace the inner member relative to the outer member in a direction parallel to the axis of rotation.

The inner member comprises an inner member opening, wherein the fastener extends at least partially through each one of the module panel opening, the housing panel opening and the inner member opening to thereby connect the module panel to the housing panel.

The first aspect of the disclosure may seek to enable that the energy storage module is appropriately attached to the housing whilst enabling that the energy storage module may be appropriately compact. A technical benefit may include that the outer member of the attachment assembly is rigidly attached to the housing panel such that the module panel opening needs only be large enough for accommodating the fastener. This in turn implies that e.g. the transversal extension of the module panel in e.g. the module panel transversal direction may be appropriately small. A small transversal extension implies that an appropriately large volume can be obtained within the energy storage module for accommodating the energy storage system.

In some examples, including in at least one preferred example, optionally, the outer member extends at least partially through the housing panel opening. A technical benefit may include that an appropriate gap is obtained between the housing panel and the energy storage module and also that the outer member is appropriately connected to the housing panel.

In some examples, including in at least one preferred example, optionally, the inner member comprises an inner member abutment portion adapted to abut a portion of the energy storage module and a distal portion located on the opposite side of the inner member abutment portion, as seen along the axis of rotation. A technical benefit may include that any gap between the inner member and the energy storage module may be reduced by rotating the inner member relative to the outer member.

In some examples, including in at least one preferred example, optionally, the distal portion comprises a tool receiving structure adapted to receive a tool for rotating the inner member relative to the outer member. A technical benefit may include that the inner member may be rotated in a straightforward manner.

In some examples, including in at least one preferred example, optionally, the attachment assembly comprises a motion prevention member arranged between the distal portion and a portion of the fastener. A technical benefit may include that the inner member is kept in place after a desired position of the inner member relative to the outer member has been achieved.

In some examples, including in at least one preferred example, optionally, the fastener comprises a fastener head and the motion prevention member is arranged between the distal portion and the fastener head. A technical benefit may include that the motion prevention member is kept in place between the distal portion and the fastener head. Moreover, the fact that the fastener head keeps the motion prevention member in place implies that the inner member is also kept in place.

In some examples, including in at least one preferred example, optionally, the fastener comprises threads and the module panel opening comprises threads adapted to engage with the threads of the fastener. A technical benefit may include an appropriate connection between the module panel and the fastener.

In some examples, including in at least one preferred example, optionally, the module panel is connected via the attachment assembly to the housing panel such that the module panel longitudinal direction and the housing panel longitudinal direction form an angle in the range of 80 - 100°, preferably in the range of 85 - 95°, such as 90°. A technical benefit may include an appropriately compact energy storage module.

In some examples, including in at least one preferred example, optionally, the module frame comprises a plurality of module panels in accordance with any one of the preceding claims and a plurality of attachment assemblies in accordance with any one of the preceding claims, each module panel being attached to the housing panel by means of an attachment assembly. A technical benefit may include an appropriately compact energy storage module since each one of the above-mentioned module panels can be made appropriately thin.

According to a second aspect of the disclosure, there is provided a vehicle comprising an energy storage assembly according to the first aspect of the disclosure.

According to a third aspect of the disclosure, there is provided a method for assembling an energy storage assembly for a vehicle. The energy storage assembly comprises a housing, an energy storage module and an attachment assembly. The energy storage module comprises at least one energy storage system comprising one or more battery cells. The housing accommodates the energy storage module.

The housing comprises a housing panel at least partially delimiting the housing. The energy storage module comprises an energy storage module frame that in turn comprises a module panel.

The module panel extends in a module panel longitudinal direction, a module panel transversal direction and a module panel vertical direction. A longitudinal extension of the module panel in the module panel longitudinal direction is greater than each one of a transversal extension of the module panel in the module panel transversal direction and a vertical extension of the module panel in the module panel vertical direction.

The housing panel extends in a housing panel longitudinal direction, a housing panel transversal direction and a housing panel vertical direction. A longitudinal extension of the housing panel in the housing panel longitudinal direction is greater than each one of a transversal extension of the housing panel in the housing panel transversal direction and a vertical extension of the housing panel in the housing panel vertical direction.

The module panel comprises a module panel opening having a module panel opening extension in an opening direction forming a module panel opening angle to the module panel longitudinal direction, an absolute value of the module panel opening angle being less than 5°.

The housing panel comprises a first housing panel side and a second housing panel side being located on opposite sides of a plane defined by the housing panel longitudinal direction and the housing panel vertical direction. The housing panel further comprises a housing panel opening extending from the first housing panel side to the second housing panel side.

The method comprises using an attachment assembly comprising an outer member, an inner member and a fastener for connecting the housing panel to the module panel. The outer member comprises an outer member opening with internal threads and the inner member comprising external threads. The inner member comprises an inner member opening.

The method comprises:
- arranging the outer member and the inner member to the housing panel such that:
   ∘ the outer member is at least partially aligned with the housing panel opening and is rigidly attached to the housing panel, and
   ∘ the inner member is located at least partially within the outer member opening such that the internal threads mesh with the external threads;
- rotating the inner member relative to the outer member around an axis of rotation until a portion of the inner member contacts a portion of the energy storage module, and
- inserting the fastener at least partially through each one of the module panel opening, housing panel opening and the inner member opening to thereby connect the module panel to the housing panel.

The second aspect of the disclosure may seek to provide an assembling method that enable that the energy storage module is appropriately attached to the housing whilst enabling that the energy storage module may be appropriately compact. A technical benefit may include that the outer member of the attachment assembly is rigidly attached to the housing panel such that the module panel opening needs only be large enough for accommodating the fastener. This in turn implies that e.g. the transversal extension of the module panel in the module panel transversal direction may be appropriately small. A small transversal extension implies that an appropriately large volume can be obtained within the energy storage module for accommodating the energy storage system.

In some examples, including in at least one preferred example, optionally, arranging the outer member and the inner member to the housing panel such that the outer member is at least partially aligned with the housing panel opening comprises arranging the outer member such that it at least partially extends through the housing panel opening. A technical benefit may include that an appropriate gap is obtained between the housing panel and the energy storage module and also that the outer member is appropriately connected to the housing panel.

In some examples, including in at least one preferred example, optionally, the inner member comprises an inner member abutment portion adapted to abut the module panel and a distal portion located on the opposite side of the inner member abutment portion, as seen along the axis of rotation.

In some examples, including in at least one preferred example, optionally, the method comprises arranging a motion prevention member between the distal portion and a portion of the fastener after the portion of the inner member contacts a portion of the energy storage module and before inserting the fastener at least partially through each one of the module panel opening, housing panel opening and the inner member opening to thereby connect the module panel to the housing panel.

In some examples, including in at least one preferred example, optionally, the fastener comprises threads and the module panel opening comprises threads adapted to engage with the threads of the fastener.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**Fig. 1** is an example of the present disclosure, comprising a side view of a vehicle, in the form of a truck, according to an example.
**Fig. 2** shows an energy storage assembly, according to an example.
**Fig. 3** shows a portion of an energy storage assembly, according to an example.
**Fig. 4** is a flow chart of an example method.

### DETAILED DESCRIPTION

The detailed description set forth below provides information and examples of the disclosed technology with sufficient detail to enable those skilled in the art to practice the disclosure.

A vehicle may comprise an energy storage assembly for storing electric energy to be used by one or more consumers of electric power, such as one or more electric motors for propulsion of the electric vehicle. Purely by way of example, a vehicle that comprises an energy storage assembly may be any one of a battery-powered electric vehicle BEV, a hybrid electric vehicle HEV, a plug-in hybrid electric vehicle PHEV and a vehicle comprising a battery and a fuel cell.

The disclosure may seek to obtain an energy storage assembly that is appropriately compact in order to not take up too much space within the vehicle.

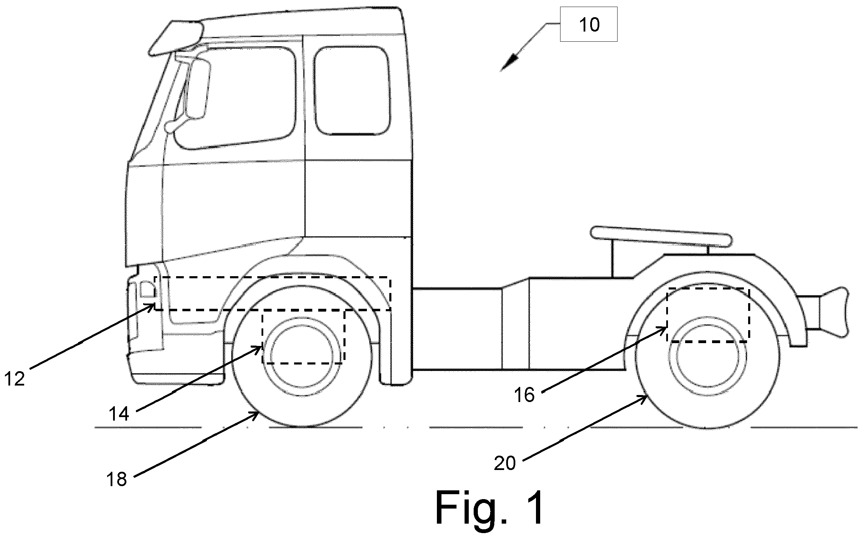

**Fig. 1** is an example of the present disclosure, comprising a side view of a vehicle 10, in the form of a truck, according to an example.

Whilst the shown example illustrates a truck, the disclosure may relate to any vehicle, such as a car, bus, industrial vehicle, boat, ship, etc., wherein motive power may be derived from an electric motor.

The vehicle 10 comprises an energy storage assembly 12. Purely by way of example, the energy storage assembly 12 may be connected to one or more electric motors 14, 16 for propelling the vehicle 10. In the **Fig. 1** example, the vehicle 10 comprises a first electric motor 14 connected to a first ground engaging member 18. Moreover, though purely by way of example, the **Fig. 1** vehicle 10 also comprises a second electric motor 16 connected to a second ground engaging member 20.

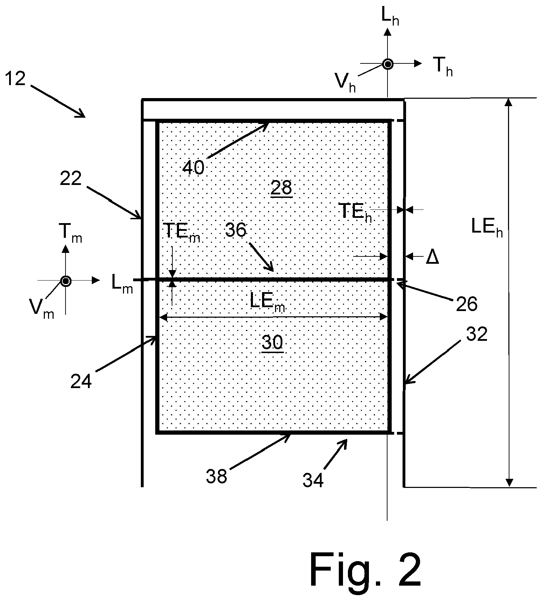

**Fig. 2** illustrates an example of an energy storage assembly 12 for a vehicle. Purely by way of example, the energy storage assembly 12 may be used in the **Fig. 1** vehicle 10. The energy storage assembly 12 comprises a housing 22, an energy storage module 24 and an attachment assembly 26. The energy storage module 24 comprises at least one energy storage system comprising one or more battery cells 28, 30. Although the **Fig. 2** example illustrates that an energy storage module 24 comprises two battery cells 28, 30, it is also envisaged that other examples of an energy storage module 24 may comprise only one battery cell or more than two battery cells. Moreover, as indicated in **Fig. 2****,** the housing 22 accommodates the energy storage module 24. For the sake of completeness, it should be noted that examples of the energy storage assembly 12 may comprise more than one energy storage module 24 and the housing 22 may thus accommodate more than one energy storage module 24.

Furthermore, as indicated in **Fig. 2****,** the housing 22 comprises a housing panel 32 at least partially delimiting the housing 22. Moreover, again with reference to **Fig. 2****,** the energy storage module 24 comprises an energy storage module frame 34 that in turn comprises a module panel 36. As may be realized from the **Fig. 2** example, an energy storage module frame 34 may comprise a plurality of module panels 36, 38, 40.

The module panel 36 extends in a module panel longitudinal direction Lₘ, a module panel transversal direction Tₘ and a module panel vertical direction Vₘ. A longitudinal extension LEₘ of the module panel in the module panel longitudinal direction Lₘ is greater than each one of a transversal extension TEₘ of the module panel 36 in the module panel transversal direction Tₘ and a vertical extension (not shown in **Fig. 2**) of the module panel 36 in the module panel vertical direction Vₘ. Moreover, though purely by way of example, the vertical extension of the module panel 36 in the module panel vertical direction Vₘ may be greater than the transversal extension TEₘ of the module panel 36 in the module panel transversal direction Tₘ.

The housing panel 32 extends in a housing panel longitudinal direction Lₕ, a housing panel transversal direction Tₕ and a housing panel vertical direction Vₕ. A longitudinal extension LEₕ of the housing panel 32 in the housing panel longitudinal direction Lₕ is greater than each one of a transversal extension TEₕ of the housing panel 32 in the housing panel transversal direction Tₕ and a vertical extension (not shown in **Fig. 2**) of the housing panel 32 in the housing panel vertical direction Vₕ. Moreover, though purely by way of example, the vertical extension of the housing panel 32 in the housing panel vertical direction Vₕ may be greater than the transversal extension TEₕ of the housing panel 32 in the housing panel transversal direction Tₕ.

As indicated in **Fig. 2****,** there may be an initial play Δ between the housing panel 32 and the energy storage module 24 before the housing 22 and the energy storage module 24 are connected to each other. Depending on e.g. manufacturing tolerances or the like, the initial play Δ may be different for different combinations of individual energy storage modules 24 and housings 22. As such, it would be beneficial to connect the housing panel 32 to the energy storage module 24 in a manner that accommodates different initial plays Δ but nevertheless ensures that the energy storage module 24 and the housing panel 32 are appropriately connected to each other. Moreover, as has been indicated above, it would be desirable to obtain the above connection whilst ensuring that the volume within the energy storage module 24 is appropriately large in order to accommodate the energy storage system.

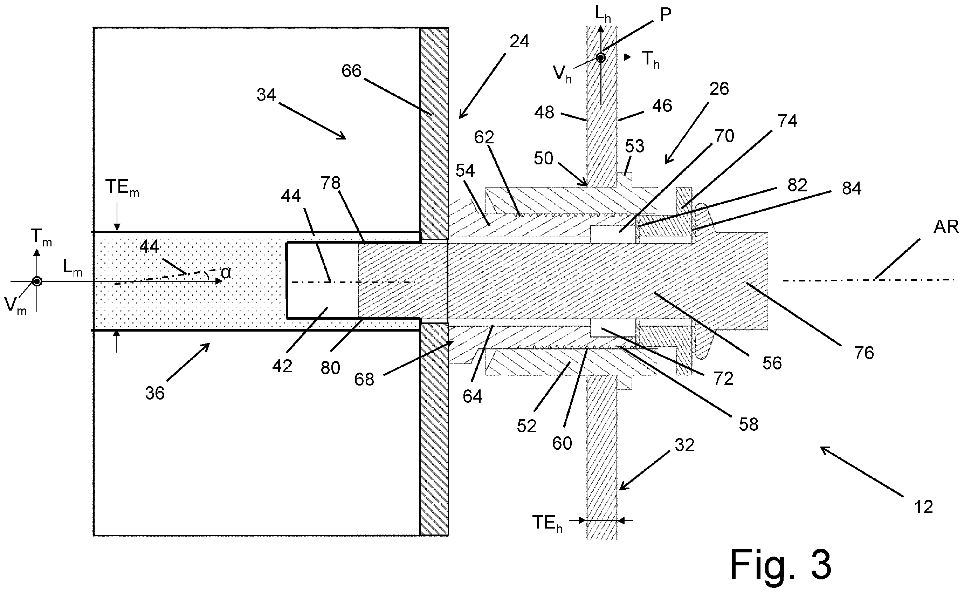

**Fig. 3** illustrates a portion of an energy storage assembly 12. The **Fig. 3** portion illustrates *inter alia* a module panel 36 of an energy storage module 24, a housing panel 32 and an attachment assembly 26. As indicated in **Fig. 3****,** the module panel 36 comprises a module panel opening 42 having a module panel opening extension 44 in an opening direction forming a module panel opening angle to the module panel longitudinal direction Lₘ. An absolute value of the module panel opening angle is less than 5°. In the **Fig. 3** example, the absolute value of the module panel opening angle is zero, resulting in that the module panel opening extension 44 is parallel to the module panel longitudinal direction Lₘ. However, for the sake of completeness, an example of a non-zero module panel opening angle α is also indicated in **Fig. 3** in order to illustrate how the angle α may be determined between the module panel opening extension 44 and the module panel longitudinal direction Lₘ.

Turning to the housing panel 32, the housing panel 32 comprises a first housing panel side 46 and a second housing panel side 48 being located on opposite sides of a plane P defined by the housing panel longitudinal direction Lₕ and the housing panel vertical direction Vₕ. The housing panel 32 further comprises a housing panel opening 50 extending from the first housing panel side 46 to the second housing panel side 48.

The attachment assembly 26 comprises an outer member 52, an inner member 54 and a fastener 56. The outer member 52 is rigidly attached to the housing panel 32. As non-limiting examples, outer member 52 may be rigidly attached to the housing panel 32 by means of a weld joint (not shown), a glue joint (not shown), a bolt joint (not shown) or any other attachment means. Moreover, in the **Fig. 3** example, the outer member 52 comprises a flange 53 adapted to abut the first housing panel side 46. However, in other examples of the energy storage assembly 12, the outer member 52 may comprise a flange adapted to abut the second housing panel side 48. Further, examples of the energy storage assembly 12, the outer member 52 need not necessarily comprise a flange. The outer member comprises 52 an outer member opening 58 at least partially aligned with the housing panel opening 50. Moreover, as indicated in **Fig. 3****,** the outer member opening 58 comprises internal threads 60 and the inner member 54 comprises external threads 62. The inner member 54 is located at least partially within the outer member opening 58 whereby the internal threads 60 mesh with the external threads 62 such that a rotation of the inner member 54 relative to the outer member 52 around an axis of rotation AR will displace the inner member 54 relative to the outer member 52 in a direction parallel to the axis of rotation AR. Preferably, and as indicated in **Fig. 3****,** the axis of rotation AR forms an axis of rotation angle to the module panel longitudinal direction Lₘ. An absolute value of the axis of rotation angle is less than 5°. In the **Fig. 3** example, the absolute value of the module panel opening angle is zero, resulting in that the axis of rotation AR is parallel to the module panel longitudinal direction Lₘ.

The inner member 54 comprises an inner member opening 64. The fastener 56 extends at least partially through each one of the module panel opening 42, the housing panel opening 50 and the inner member opening 64 to thereby connect the module panel 36 to the housing panel 32. Moreover, purely by way of example, the storage module frame 34 may comprise a module side panel 66 to which the module panel 36 is connected. As a non-limiting example, the module side panel 66 may extend in a direction being substantially parallel to the housing panel 32. Moreover, again as a non-limiting example, the inner member 54 may be adapted to a abut a portion of the module side panel 66.

As may be realized from the above, as well as from **Fig. 3****,** the module panel 36 and the housing panel 32 may be connected to each other via the attachment assembly 26 in a manner that may only require that the module panel opening 42 is large enough for accommodating a portion of the fastener 56. This in turn implies that a size of the module panel 36, such as the transversal extension TEₘ thereof, may be appropriately small whilst nevertheless enabling that the module panel 36 and the housing panel 32 may be connected to each other via the attachment assembly 26, wherein the attachment assembly 26 also enables that a distance, in a direction parallel to the axis of rotation AR, may be adjusted by means of the outer member 52 and the inner member 54.

Moreover, purely by way of example and as indicated in **Fig. 3****,** the outer member 52 may extend at least partially through the housing panel opening 50.

Moreover, as a non-limiting example, as indicated in **Fig. 3****,** the inner member 54 may comprise an inner member abutment portion 68 adapted to abut a portion of the energy storage module 24. Purely by way of example, the inner member abutment portion 68 may be adapted to abut a portion of the module side panel 66 indicated in Fig. 3. Moreover, the inner member 54 may comprise a distal portion 70 located on the opposite side of the inner member abutment portion 68, as seen along the axis of rotation AR.

Furthermore, as a non-limiting example and as also illustrated in Fig 3, the distal portion 70 may comprise a tool receiving structure 72 adapted to receive a tool (not shown in **Fig. 3**) for rotating the inner member 52 relative to the outer member 54. As such, by means of the tool (not shown), the inner member 52 may be rotated relative to the outer member 54 until a portion of the inner member 52 - for instance the inner member abutment portion 68 - abuts a portion of the energy storage module 24, such as the module side panel 66 as exemplified in **Fig. 3****.**

Moreover, as a non-limiting example exemplified in **Fig. 3****,** the attachment assembly 26 may comprise a motion prevention member 74 arranged between the distal portion 70 and a portion of the fastener 56. In fact, in the Fig. 3 example, purely by way of example, the fastener 56 comprises a fastener head 76 and the motion prevention member 74 is arranged between the distal portion 70 and the fastener head 76. Thus, when the inner member 54 is in a position relative to the outer member 52 such that a portion of the inner member 54 abuts a portion of the energy storage module 24, the motion prevention member 74 may ensure that the thus obtained position of the inner member 54 relative to the outer member 52 is kept.

Additionally, the attachment assembly 26 may for instance comprise a distal portion seal 82 which is arranged between the motion prevention member 74 and the distal portion 70. Moreover, the attachment assembly 26 may for instance comprise a motion prevention member seal 84 which is arranged between the motion prevention member 74 and the fastener head 76.

The fastener 56 may be connected to the module panel in a plurality of different ways. Purely by way of example, the fastener 56 may be a rivet that is pressed into the module panel opening 42 and adapted to deform therein. However, **Fig. 3** illustrates a non-limiting example in which the fastener 56 comprises threads 78 and the module panel opening 42 comprises threads 80 adapted to engage with the threads 78 of the fastener 56.

Moreover, **Fig. 3** illustrates a non-limiting example in which the module panel 36 is connected via the attachment assembly 26 to the housing panel 32 such that the module panel longitudinal direction Lₘ and the housing panel longitudinal direction Lₕ form an angle in the range of 80 - 100°, preferably in the range of 85 - 95°, such as 90°.

In an attempt to simplify the presentation of the housing panel 32, the module panel 36 and the attachment assembly 26, **Fig. 3** only presents a single connection between the module frame and the housing panel. However, it should be noted that examples of the energy storage assembly 12 may comprise a plurality of connections. As such, in some examples, the energy storage module frame 34 may comprise a plurality of module panels and a plurality of attachment assemblies, each module panel being attached to the housing panel by means of an attachment assembly. To this end reference is made to the **Fig. 2** example illustrating an energy storage module frame 34 that comprises a plurality of module panels 36, 38, 40. Each one of the module panels 36, 38, 40 may be attached to the housing panel 32 by means of an attachment assembly 26, such as any example of the attachment assembly presented above with reference to **Fig. 3****.**

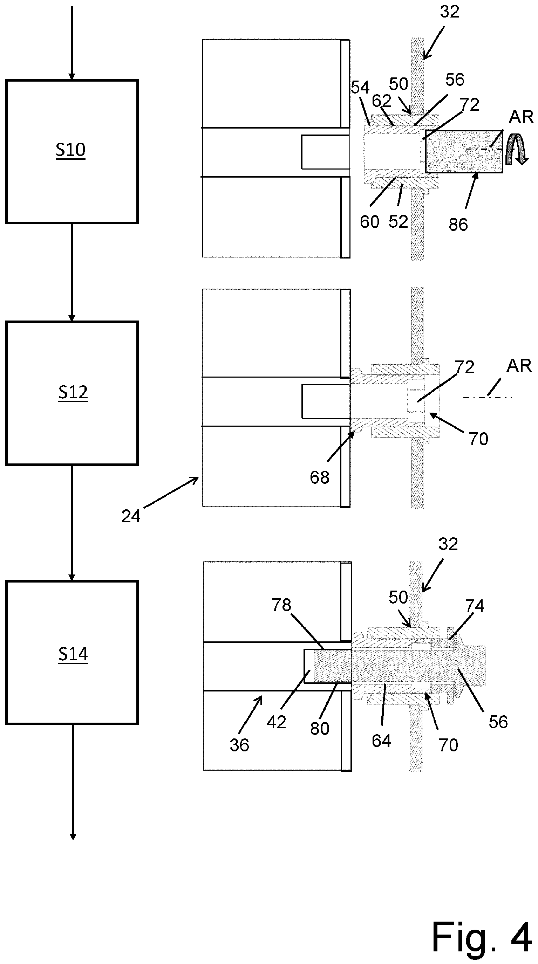

**Fig. 4** illustrates a flow chart of an example method for assembling an energy storage assembly 12 for a vehicle (not shown in **Fig. 4****).** For structural features of the energy storage assembly 12, reference is made to the above description. As such, for the sake of brevity, only features presented below are numbered in **Fig. 4****.**

The method comprises the following features:
S 10: arranging the outer member 52 and the inner member 54 to the housing panel 32 such that:
   ∘ the outer member 52 is at least partially aligned with the housing panel opening 50 and is rigidly attached to the housing panel 32, and
   ∘ the inner member 54 is located at least partially within the outer member opening 56 such that the internal threads 60 mesh with the external threads 62;
S 12: rotating the inner member 54 relative to the outer member 52 around an axis of rotation AR until a portion 68 of the inner member 54 contacts a portion of the energy storage module 24. As indicated in **Fig. 4****,** the above-mentioned rotation may be effected by inserting a tool 86 in the tool receiving structure 72 of the inner member 54 and rotating the tool 86 to thereby impart a rotation on the inner member 54;
S14: inserting the fastener 56 at least partially through each one of the module panel opening 42, the housing panel opening 50 and the inner member opening 64 to thereby connect the module panel 36 to the housing panel 32.

In some examples, and as indicated in **Fig. 4****,** arranging the outer member 52 and the inner member 54 to the housing panel 32 such that the outer member 52 is at least partially aligned with the housing panel opening 50 may comprises arranging the outer member 54 such that it at least partially extends through the housing panel opening 50.

In some examples, and as also indicated in **Fig. 4****,** the inner member 54 may comprise an inner member abutment portion 68 adapted to abut a portion of said energy storage module 24 and a distal portion 70 located on the opposite side of the inner member abutment portion 68, as seen along the axis of rotation AR.

In some examples, and as indicated in the bottom portion of **Fig. 4****,** the method may comprise arranging a motion prevention member 74 between the distal portion 70 and a portion of the fastener 56 after the portion 68 of the inner member 54 contacts a portion of the energy storage module 24 and before inserting the fastener 56 at least partially through each one of the module panel opening 36, the housing panel opening 50 and the inner member opening 64 to thereby connect the module panel 36 to the housing panel 32.

In some examples, the fastener 56 comprises threads 78 and the module panel opening 42 comprises threads 80 adapted to engage with the threads 78 of the fastener 56.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy storage assembly (12) for a vehicle (10), said energy storage assembly (12) comprising a housing (22), an energy storage module (24) and an attachment assembly (26), said energy storage module (24) comprising at least one energy storage system comprising one or more battery cells (28, 30), said housing (22) accommodating said energy storage module (24),
said housing (22) comprising a housing panel (32) at least partially delimiting said housing (22), said energy storage module (24) comprising an energy storage module frame (34) that in turn comprises a module panel (36),
said module panel (36) extending in a module panel longitudinal direction (Lₘ), a module panel transversal direction (Tₘ) and a module panel vertical direction (Vₘ), a longitudinal extension (LEₘ) of said module panel (36) in said module panel longitudinal direction (Lₘ) being greater than each one of a transversal extension (TEₘ) of said module panel (36) in said module panel transversal direction (Tₘ) and a vertical extension of said module panel (36) in said module panel vertical direction (Vₘ),
said housing panel (32) extending in a housing panel longitudinal direction (Lₕ), a housing panel transversal direction (Tₕ) and a housing panel vertical direction (Vₕ), a longitudinal extension (LEₕ) of said housing panel (32) in said housing panel longitudinal direction (Lₕ) being greater than each one of a transversal extension (TEₕ) of said housing panel (32) in said housing panel transversal direction (Tₕ) and a vertical extension of said housing panel (32) in said housing panel vertical direction (Vₕ),
said module panel (36) comprising a module panel opening (42) having a module panel opening (42) extension in an opening direction forming a module panel opening angle (α) to said module panel longitudinal direction (Lₘ), an absolute value of said module panel opening angle (α) being less than 5°,
said housing panel (32) comprising a first housing panel side (46) and a second housing panel side (48) being located on opposite sides of a plane defined by said housing panel longitudinal direction (Lₕ) and said housing panel vertical direction (Vₕ), said housing panel (32) further comprising a housing panel opening (50) extending from said first housing panel side (46) to said second housing panel side (48);
said attachment assembly (26) comprising an outer member (52), an inner member (54) and a fastener (56), said outer member (52) being rigidly attached to said housing panel (32), said outer member (52) comprising an outer member opening (58) at least partially aligned with said housing panel opening (50), wherein said outer member opening (58) comprises internal threads (60) and said inner member (54) comprises external threads (62), said inner member (54) being located at least partially within said outer member opening (58) whereby said internal threads (60) mesh with said external threads (62) such that a rotation of said inner member (54) relative to said outer member (52) around an axis of rotation (AR) will displace said inner member (54) relative to said outer member (52) in a direction parallel to said axis of rotation (AR),
said inner member (54) comprising an inner member opening (64), wherein said fastener (56) extends at least partially through each one of said module panel opening (42), said housing panel opening (50) and said inner member opening (64) to thereby connect said module panel (36) to said housing panel (32).

2. The energy storage assembly (12) according to claim 1, wherein said outer member (52) extends at least partially through said housing panel opening (50).

3. The energy storage assembly (12) according to any one of the preceding claims, wherein said inner member (54) comprises an inner member abutment portion (68) adapted to abut a portion of said energy storage module (24) and a distal portion (70) located on the opposite side of said inner member abutment portion (68), as seen along said axis of rotation (AR).

4. The energy storage assembly (12) according to claim 3, wherein said distal portion (70) comprises a tool receiving structure (72) adapted to receive a tool (86) for rotating said inner member (54) relative to said outer member (52).

5. The energy storage assembly (12) according to claim 3 or claim 4, wherein said attachment assembly (26) comprises a motion prevention member (74) arranged between said distal portion (70) and a portion of said fastener (56).

6. The energy storage assembly (12) according to claim 5, wherein said fastener (56) comprises a fastener head (76) and said motion prevention member (74) is arranged between said distal portion (70) and said fastener head (76).

7. The energy storage assembly (12) according to any one of the preceding claims, wherein said fastener (56) comprises threads (78) and said module panel opening (42) comprises threads (80) adapted to engage with said threads (78) of said fastener (56).

8. The energy storage assembly (12) according to any one of the preceding claims, wherein said module panel (36) is connected via said attachment assembly (26) to said housing panel (32) such that said module panel longitudinal direction (Lₘ) and said housing panel longitudinal direction (Lₕ) form an angle in the range of 80 - 100°, preferably in the range of 85 - 95°, such as 90°.

9. The energy storage assembly (12) according to any one of the preceding claims, wherein said module frame comprises a plurality of module panels (36, 38, 40) in accordance with any one of the preceding claims and a plurality of attachment assemblies (26) in accordance with any one of the preceding claims, each module panel (36) being attached to said housing panel (32) by means of an attachment assembly (26).

10. A vehicle (10) comprising an energy storage assembly (12) according to any one of the preceding claims.

11. A method for assembling an energy storage assembly (12) for a vehicle (10), said energy storage assembly (12) comprising a housing (22), an energy storage module (24) and an attachment assembly (26), said energy storage module (24) comprising at least one energy storage system comprising one or more battery cells (28, 30), said housing (22) accommodating said energy storage module (24),
said housing (22) comprising a housing panel (32) at least partially delimiting said housing (22), said energy storage module (24) comprising an energy storage module frame (34) that in turn comprises a module panel (36),
said module panel (36) extending in a module panel longitudinal direction (Lₘ), a module panel transversal direction (Tₘ) and a module panel vertical direction (Vₘ), a longitudinal extension (LEₘ) of said module panel (36) in said module panel longitudinal direction (Lₘ) being greater than each one of a transversal extension (TEₘ) of said module panel (36) in said module panel transversal direction (Tₘ) and a vertical extension of said module panel (36) in said module panel vertical direction (Vₘ),
said housing panel (32) extending in a housing panel longitudinal direction (Lₕ), a housing panel transversal direction (Tₕ) and a housing panel vertical direction (Vₕ), a longitudinal extension (LEₕ) of said housing panel (32) in said housing panel longitudinal direction (Lₕ) being greater than each one of a transversal extension (TEₕ) of said housing panel (32) in said housing panel transversal direction (Tₕ) and a vertical extension of said housing panel (32) in said housing panel vertical direction (Vₕ),
said module panel (36) comprising a module panel opening (42) having a module panel opening (42) extension in an opening direction forming a module panel opening angle (α) to said module panel longitudinal direction (Lₘ), an absolute value of said module panel opening angle (α) being less than 5°,
said housing panel (32) comprising a first housing panel side (46) and a second housing panel side (48) being located on opposite sides of a plane defined by said housing panel longitudinal direction (Lₕ) and said housing panel vertical direction (Vₕ), said housing panel (32) further comprising a housing panel opening (50) extending from said first housing panel side (46) to said second housing panel side (48);
said method comprising using an attachment assembly (26) comprising an outer member (52), an inner member (54) and a fastener (56) for connecting said housing panel (32) to said module panel (36), said outer member (52) comprising an outer member opening (58) with internal threads (60) and said inner member (54) comprising external threads (62), said inner member (54) comprising an inner member opening (64), said method comprising:
- arranging said outer member (52) and said inner member (54) to said housing panel (32) such that:
∘ said outer member (52) is at least partially aligned with said housing panel opening (50) and is rigidly attached to said housing panel (32), and
∘ said inner member (54) is located at least partially within said outer member opening (58) such that said internal threads (60) mesh with said external threads (62);
- rotating said inner member (54) relative to said outer member (52) around an axis of rotation (AR) until a portion of said inner member (54) contacts a portion of said energy storage module (24), and
- inserting said fastener (56) at least partially through each one of said module panel opening (42), housing panel opening (50) and said inner member opening (64) to thereby connect said module panel (36) to said housing panel (32).

12. The method according to claim 11, wherein arranging said outer member (52) and said inner member (54) to said housing panel (32) such that said outer member (52) is at least partially aligned with said housing panel opening (50) comprises arranging said outer member (52) such that it at least partially extends through said housing panel opening (50).

13. The method according to claim 11 or claim 12, wherein said inner member (54) comprises an inner member abutment portion (68) adapted to abut said module panel (36) and a distal portion (70) located on the opposite side of said inner member abutment portion (68), as seen along said axis of rotation (AR).

14. The method according to any one of claims 11 to 13, wherein said method comprises arranging a motion prevention member (74) between said distal portion (70) and a portion of said fastener (56) after said portion 68 of said inner member (54) 54 contacts a portion of said energy storage module (24) 24 and before inserting said fastener (56) at least partially through each one of said module panel opening (42), housing panel opening (50) and said inner member opening (64) to thereby connect said module panel (36) to said housing panel (32).

15. The method according to any one of claims 11 to 14, wherein said fastener (56) comprises threads and said module panel opening (42) comprises threads adapted to engage with said threads of said fastener (56).
